# EUROPÄISCHE PATENTANMELDUNG

(11) **EP 3 385 016 A1**
(43) Veröffentlichungstag der Anmeldung: **10.10.2018**
(21) Anmeldenummer: 18157830.3
(22) Anmeldetag: 21.02.2018
(51) Int. Cl.: B23B 31/26, B23B 31/30

(54) **SPANNVORRICHTUNG UND BEARBEITUNGSEINHEIT MIT EINER DERARTIGEN SPANNVORRICHTUNG**

(30) Priorität: 07.04.2017 DE 102017107488
(71) Anmelder: Ott-Jakob Spanntechnik GmbH, 87663 Lengenwang (DE)
(72) Erfinder: Greif, Josef, 87496 Friesenried (DE); Mohr, Peter, 87487 Wiggensbach (DE); Rösch, Conrad, 87549 Pfronten (DE); Reisacher, Bartholomäus, 86807 Buchloe (DE)
(74) Vertreter: Charrier Rapp & Liebau

(57) **Zusammenfassung**

Die Erfindung betrifft eine Spannvorrichtung zum Spannen eines Werkstücks oder einer Werkzeugs bzw. einer Werkzeugaufnahme (1) in einem Maschinenteil (2) einer Werkzeugmaschine, mit einem innerhalb des Maschinenteils (2) verschiebbar angeordneten Spannstange (17, 18), einem über die Spannstange (17, 18) zwischen einer Spannstellung und einer Lösestellung bewegbaren Spannsatz (6), einer der Spannstange (17, 18) zugeordneten Spannfeder (7) zur Erzeugung der Einzugskraft des Spannsatzes (6) und einer Löseeinrichtung (8), durch die der Spannsatz (6) über die Spannstange (17, 18) entgegen der Kraft der Spannfeder (7) in die Lösestellung bewegbar ist. Um einen kraftoptimierten und effektiven Spannvorgang zu ermöglichen, ist die Spannfeder (7) zwischen einem ersten Stangenteil (17) und einem demgegenüber verschiebbaren zweiten Stangenteil (18) der Spannstange (17, 18) eingespannt und wird von der Löseeinrichtung (8) bei der Bewegung des Spannsatzes (6) in die Lösestellung durch entgegengesetzte Verschiebung der beiden Stangenteile (17, 18) an beiden Enden zusammengedrückt.

## Beschreibung

Die Erfindung betrifft eine Spannvorrichtung zum Spannen eines Werkstücks oder eines Werkzeugs bzw. einer Werkzeugaufnahme an einem Maschinenteil einer Werkzeugmaschine nach dem Oberbegriff des Anspruchs 1. Die Erfindung betrifft außerdem eine Bearbeitungseinheit mit einer solchen Spannvorrichtung.

Eine derartige Spannvorrichtung ist aus der DE 10 2004 026 438 B4 bekannt. Diese weist eine innerhalb einer Maschinenspindel verschiebbar angeordnete Spannstange und einen innerhalb der Maschinenspindel angeordneten Spannsatz auf, der über die Spannstange zwischen einer Spannstellung und einer Lösestellung bewegbar ist. In der Maschinenspindel ist ferner eine als Tellerfederpaket ausgebildet Spannfeder zur Erzeugung der Spannkraft des Spannsatzes angeordnet. Die Spannfeder ist zwischen einem im Durchmesser vergrößerten hinteren Ende der Spannstange und einem innerhalb der Maschinenspindel axial abgestützten Anlagering eingespannt. Durch eine am hinteren Ende der Maschinenspindel angeordnete Löseeinrichtung kann der Spannsatz über die Spannstange entgegen der Kraft der Spannfeder in die Lösestellung verschoben werden. Da sich bei dieser bekannten Spannvorrichtung die Spannfeder an der einen Seite gegenüber der Maschinenspindel abstützt, wird die Maschinenspindel auch mit einer relativ großen Axialkraft beaufschlagt. Dadurch wird z.B. die Lagerung der üblicherweise in einer Spindelhülse oder einer Spindelaufnahme drehbar gelagerten Maschinenspindel stark beansprucht.

Aufgabe der Erfindung ist, eine Spannvorrichtung und eine Bearbeitungseinheit mit einer solchen Spannvorrichtung zu schaffen, die einen kraftoptimierten und effektiven Spannvorgang ermöglichen.

Diese Aufgabe wird durch eine Spannvorrichtung mit den Merkmalen des Anspruchs 1 und durch eine Bearbeitungseinheit mit den Merkmalen des Anspruchs 13 gelöst. Zweckmäßige Weiterbildungen und vorteilhafte Ausgestaltungen der Erfindung sind in den Unteransprüchen angegeben.

Bei der erfindungsgemäßen Spannvorrichtung zum Spannen eines Werkstücks oder eines Werkzeugs bzw. einer Werkzeugaufnahme in einem Maschinenteil einer Werkzeugmaschine ist die Spannfeder zur Erzeugung der Einzugskraft eines in dem Maschinenteil angeordneten Spannsatzes zwischen einem ersten Stangenteil und einem demgegenüber verschiebbaren zweiten Stangenteil der Spannstange eingespannt und wird von der Löseeinrichtung bei der Bewegung des Spannsatzes in die Lösestellung durch entgegengesetzte Verschiebung der beiden Stangenteile an beiden Enden zusammengedrückt. Dadurch können die von der Spannfeder erzeugten Axialkräfte effektiver genutzt und die Belastung des die Spannvorrichtung aufnehmenden Maschinenteils verringert werden.

Um mit möglichst geringem Aufwand eine gegensinnige Bewegung der beiden Stangenteile zu erreichen, kann die Löseeinrichtung ein innerhalb einer stationären Aufnahme verschiebbar angeordnetes Gehäuse zur Verschiebung des zweiten Stangenteils und einen innerhalb eines Druckraums des Gehäuses verschiebbar geführten und über ein Druckmedium bewegbaren Druckkolben zur Verschiebung des ersten Stangenteils aufweisen. Durch die verschiebbare Anordnung des Gehäuses wird dieses gegenüber dem in Axialrichtung nicht beweglichen Maschinenteil nach hinten gedrückt, wenn das erste Stangenteil von dem Druckkolben in das Maschinenteil hineingedrückt wird. Dadurch kann über das bewegliche Gehäuse gleichzeitig das zweite Stangenteil aus dem Maschinenteil herausgezogen werden.

An dem hinteren Ende des zweiten Stangenteils kann eine Zugbuchse angeordnet sein, die über ein Verbindungsstück mit dem Gehäuse der Löseinrichtung verbunden ist. Zur einfachem Montage kann das Verbindungsstück mehrere im Umfangsrichtung voneinander beabstandete, zangenförmige Verbindungsteile enthalten, die mit vorderen und hinteren Nasen einen Bund an der Zugbuchse und einen Bund an einem Gehäuseteil des Gehäuses übergreifen. Die zangenförmigen Verbindungsteile können durch eine Feder zusammengehalten und nach innen vorgespannt sein.

In der Zugbuchse ist vorzugsweise ein im Durchmesser erweitertes hinteres Ende des ersten Stangenteils axial verschiebbar geführt. Das hintere Ende des ersten Stangenteils kann über mehrere in der Zugbuchse axial verschiebbar geführte Stifte mit einem Druckring verbunden sein.

Die Spannfeder kann zweckmäßigerweise zwischen einer Ringschulter des zweiten Stangenteils und dem mit dem ersten Stangenteil verbundenen Druckring eingespannt sein. Durch entgegengesetzte Bewegung der beiden Stangenteile der Spannstange kann so die Spannfeder beim Lösen der Spannvorrichtung einfach auf beiden Seiten zusammengedrückt werden.

Der Spannsatz weist in einer vorteilhaften Ausführung einen zweiteiligen Spannkonus mit zwei durch die beiden Stangenteile der Spannstange entgegengesetzt zueinander verschiebbaren Teilen und mehreren an deren Außenseite im Unfangsrichtung voneinander beabstandet anliegenden Spannelementen auf, die durch entgegengesetzte Verschiebung der beiden Teile des Spannkonus zwischen einer radial äußeren Spannstellung und einer radial inneren Lösestellung bewegbar sind. Im Vergleich zu einem einteiligen Spannkonus wird die Betätigungskraft nicht am Gehäuse abgestützt, sondern auf das andere Teil des Spannkonus geleitet. Dadurch ergibt sich ein verbesserter Ausnutzungsgrad der Spannfeder und der Spannvorgang kann effektiver gestaltet werden.

In einer weiteren vorteilhaften Ausgestaltung weisen die Spannelemente eine erste innere Spannfläche zur Anlage an einer konischen Außenfläche des ersten Teils des Spannkonus und eine zweite innere Spannfläche zur Anlage an einer konischen Außenfläche des zweiten Teils des Spannkonus auf.

Eine gute und genaue Führung der beiden gegeneinander verschiebbaren Teile des Spannkonus kann dadurch erreicht werden, dass das erste Teil des Spannkonus einen zylindrischen Führungsbereich enthält, auf dem ein hohlzylindrischer Führungsabschnitt des zweiten Teils des Spannkonus verschiebbar geführt ist.

Die Spannelemente können z.B. in Form von Spannklauen mit einer durch einen konischen Flächenabschnitt gebildeten ersten äußeren Spannfläche und einer zur ersten Spannfläche entgegengesetzt geneigten und ebenfalls durch einen konischen Flächenabschnitt gebildeten zweiten äußeren Spannfläche ausgebildet sein. Die Spannelemente können aber auch eine andere Form aufweisen.

Die Erfindung betrifft außerdem eine Bearbeitungseinheit einer Werkzeugmaschine mit einem Maschinenteil und einer vorstehend beschriebenen Spannvorrichtung zum Spannen eines Werkstücks oder eines Werkzeugs bzw. einer Werkzeugaufhahme an dem Maschinenteil.

In einer besonders vorteilhaften Ausführung ist die Spannfeder in einer Durchgangsöffnung des Maschinenteils sowohl in der Spannstellung als auch in der Lösestellung des Spannsatzes von dem Maschinenteil beabstandet angeordnet. Sowohl in der Spannstellung als auch in der Lösestellung des Spannsatzes wird daher die von der Spannfeder erzeugte Kraft von den beiden Spannstangen aufgenommen, sodass die Belastung des die Spannvorrichtung aufnehmenden Maschinenteils weiter reduziert und der Ausnutzungsgrad der Spannfeder deutlich verbessert werden kann.

In einer bevorzugten Ausführung kann das Maschinenteil eine in einer Spindelaufnahme drehbar gelagerte und motorisch drehbare Arbeitsspindel sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Längsschnitt durch eine Spannvorrichtung in einer Spannstellung;
- **Figur 2**: einen Längsschnitt durch eine Spannvorrichtung in einer Lösestellung;
- **Figur 3**: eine Detailansicht eines Spannsatzes der in den Figuren 1 und 2 gezeigten Spannvorrichtung;
- **Figur 4**: einen Längsschnitt durch eine Betätigungsvorrichtung in einer Spannstellung und
- **Figur 5**: einen Längsschnitt durch eine Betätigungsvorrichtung in einer Lösestellung.

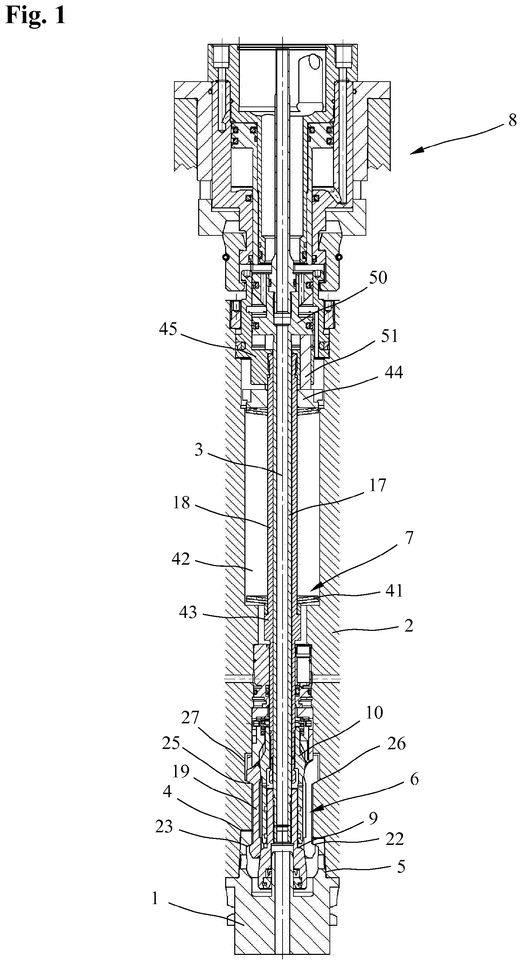

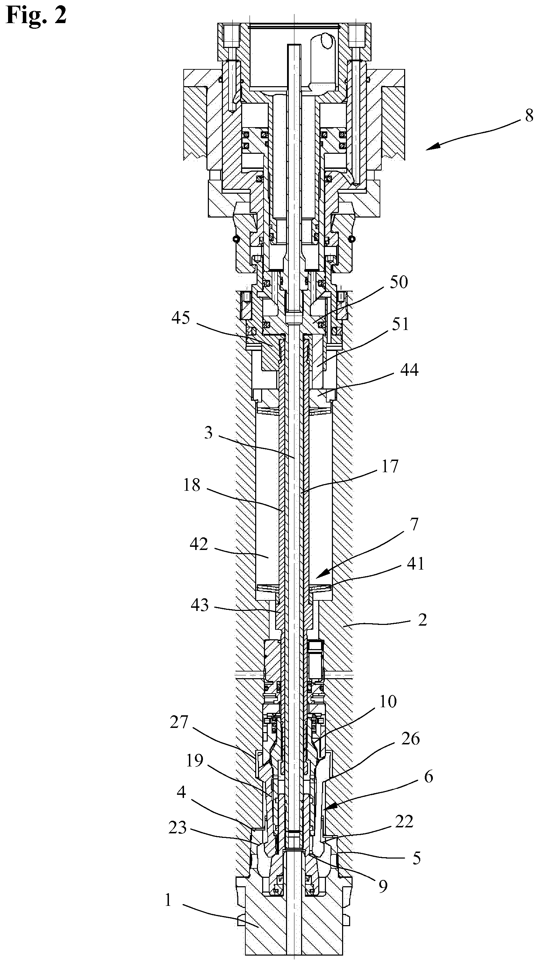

In den Figuren 1 und 2 ist eine Spannvorrichtung zum Spannen einer Werkzeugaufnahme 1 in einem Maschinenteil 2 einer Werkzeugmaschine in einer Spannstellung (Figur 1) und einer Lösestellung (Figur 2) gezeigt. Das Maschinenteil 2 ist bei der gezeigten Ausführung eine Arbeitsspindel, die über hier nicht dargestellte Lager in einer Spindelaufnahme um die Längsachse 3 drehbar gelagert ist und durch einen ebenfalls nicht gezeigten Antrieb um die Längsachse 3 gedreht werden kann. Das hier als Arbeitsspindel ausgebildete Maschinenteil 2 weist an seinem in den Figuren 1 und 2 unten angeordneten vorderen Ende eine konische Aufnahmeöffnung 4 für die Aufnahme eines Spannkegels 5 an der Werkzeugaufnahme 1 auf. Bei der gezeigten Ausführung ist die Werkzeugaufnahme 1 als HSK-Werkzeugaufnahme mit einem als Hohlschaftkegel ausgebildeten Spannkegel 5 ausgeführt.

In dem hier als Arbeitsspindel ausgebildeten Maschinenteil 2 ist ein zwischen einer Spannstellung und einer Lösestellung beweglicher Spannsatz 6 angeordnet, der durch eine ebenfalls im Maschinenteil 2 angeordnete und hier als Tellerfederpaket ausgebildete Spannfeder 7 in die Spannstellung zur Halterung der Werkzeugaufnahme 1 beaufschlagt wird und durch eine an dem hinteren Ende des Maschinenteils 2 angeordnete Löseeinrichtung 8 entgegen der Kraft der Spannfeder 7 in die Lösestellung zur Freigabe der Werkzeugaufnahme 1 bewegbar ist.

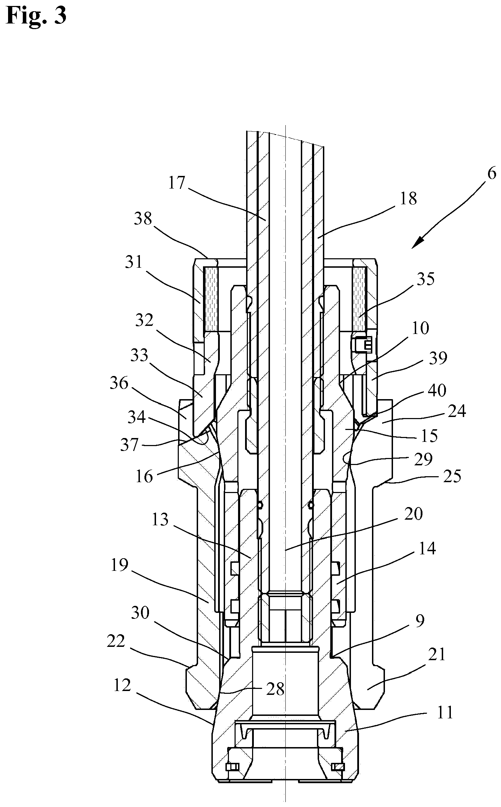

Der in Figur 3 gesondert dargestellte Spannsatz 6 enthält einen Spannkonus, der aus zwei separaten und in Axialrichtung gegeneinander verschiebbaren Teilen 9 und 10 besteht. Das der Werkzeugaufnahme 4 zugewandte und in Figur 3 unten angeordnete erste Teil 9 des Spannkonus weist einen konischen Spannbereich 11 mit einer konischen Außenfläche 12 und einen zylindrischen Führungsbereich 13 auf. Das zweite Teil 10 des Spannkonus enthält einen auf dem Führungsbereich 13 des ersten Teils 9 verschiebbar geführten, hohlzylindrischen Führungsabschnitt 14 und einen konischen Spannbereich 15 mit einer konischen Außenfläche 16. Die konischen Außenflächen 12 und 16 der Spannbereiche 11 und 15 an den beiden Teilen 9 und 10 sind entgegengesetzt zueinander geneigt. Durch den Führungsbereich 13 und den Führungsabschnitt 14 sind die beiden Teile 9 und 10 des Spannkonus gegeneinander axial verschiebbar geführt.

Die beiden Teile 9 und 10 des Spannkonus sind durch eine zweiteilige Spannstange mit einem axial verschiebbaren ersten Stangenteil 17 und einem relativ zum ersten Stangenteil 17 axial verschiebbaren zweiten Stangenteil 18 verschiebbar. An dem vorderen Ende des hier rohrförmig ausgebildeten ersten Stangenteils 17 ist das erste Teil 9 des Spannkonus befestigt, während das zweite Teil 10 des Spannkonus am Ende des um das erste Stangenteil 17 angeordneten und zu diesem koaxialen, zweiten rohrförmigen Stangenteils 18 befestigt ist.

Über die beiden Stangenteile 17 und 18 können die beiden Teile 9 und 10 des Spannkonus zusammen oder auseinander bewegt werden.

An der konischen Außenfläche 12 des ersten Teils 9 und der konischen Außenfläche 16 des zweiten Teils 10 des Spannkonus liegen mehrere in Umfangsrichtung gleich beabstandete Spannelemente 19 an, die in einer in Figur 3 gezeigten Spannstellung parallel zu einer Mittelachse 20 des Spannsatzes 3 angeordnet sind. Die hier als Spannklauen ausgebildeten Spannelemente 19 enthalten ein zur Werkzeugaufnahme 1 weisendes, verdicktes erstes Ende 21 mit einer ersten äußeren Spannfläche 22, die in einer in Figur 1 gezeigten Spannstellung in an sich bekannter Weise zu Anlage an einer konischen Innenfläche 23 an der Innenseite des Werkzeugkegels 5 der Werkzeugaufnahme 1 gelangt. Die klauenförmigen Spannelemente 19 enthalten auch ein verdicktes zweites Ende 24 mit einer zur ersten Spannfläche 22 entgegengesetzt geneigten und ebenfalls durch einen konischen Flächenabschnitt gebildeten zweiten äußeren Spannfläche 25, mit der sich die Spannelemente 19 gemäß Figur 1 an einer konischen Gegenfläche 26 innerhalb eines Ringabsatzes 27 im Maschinenteil 2 abstützen.

Durch eine Zusammenbewegung der beiden Teile 9 und 10 des Spannkonus können die klauenförmigen Spannelemente 19 in die radial äußere Spannstellung und durch Auseinanderbewegen der beiden Teile 9 und 10 des Spannkonus in die radial innere Lösestellung bewegt werden.

In der Spannstellung von Figur 3 liegen die klauenförmigen Spannelemente 19 mit einer an der Innenseite des vorderen Endes 19 vorgesehenen ersten inneren Spannfläche 28 an der konischen Außenfläche 12 des ersten Teils 9 und mit einer an der Innenseite der hinteren Endes 24 vorgesehenen zweiten inneren Spannfläche 29 an der konischen Außenfläche 16 des zweiten Teils 10 an.

In der Lösestellung von Figur 2 liegen die in die Werkzeugaufnahme 1 eingreifenden vorderen Enden 21 der klauenförmigen Spannelemente 19 mit ihren ersten inneren Spannflächen 28 auf in Figur 3 erkennbaren Schrägen 30 am Übergang vom konischen Spannbereich 11 zum schlankeren Führungsbereichs 13 am ersten Teil 9 des Spannkonus auf, so dass die vorderen Enden 21 der der klauenförmigen Spannelemente 19 radial nach innen bewegt sind und die Werkzeugaufnahme 1 für einen Wechsel freigeben. Die konischen Außenflächen 12 und 16 an den beiden Teilen 9 und 10 des Spannkonus und die inneren Spannflächen 28 und 29 der klauenförmigen Spannelemente 19 sind derart aufeinander abgestimmt, dass sich die Spannelemente 19 beim Zusammenschieben der beiden Teile 9 und 10 des Spannkonus radial nach außen bewegen und sich beim Auseinanderschieben der beiden Teile 9 und 10 radial nach innen bewegen können.

An den am zweiten Teil 10 des Spannkonus anliegenden zweiten Enden 24 der klauenförmigen Spannelemente 19 ist ein in Figur 2 näher dargestellter Abstandshalter angeordnet, durch den die Spannelemente 19 in Umfangsrichtung in einem vorbestimmten Abstand voneinander gehalten werden. Der Abstandshalter enthält eine innerhalb einer Führungsbuchse 31 axial verschiebbar geführte Haltebuchse 32, die an ihrem den Spannelementen 19 zugewandten Ende mehrere in Umfangsrichtung gleich beabstandete, in Axialrichtung vorstehende Ansätze 33 mit abgeschrägten vorderen Stirnflächen 34 aufweist. Die Haltebuchse 32 ist innerhalb der Führungsbuchse 31 verschiebbar und wird durch eine Druckfeder 35 in Richtung der klauenförmigen Spannelemente 19 gedrückt. Die Ansätze 33 der Haltebuchse 32 greifen in eine Nut 36 am rückseitigen zweiten Ende 24 der klauenförmigen Spannelemente 19 ein und liegen mit ihrer abgeschrägten Stirnfläche 34 an einer schrägen Gegenfläche 37 im Grund der Nut 36 an.

Die Führungsbuchse 31 hat eine hintere Anlagefläche 38 und weist am vorderen Ende mehrere in Umfangsrichtung beabstandete und zwischen die Ansätze 33 der Haltebuchse 32 ragende Ringsegmente 39 mit abgeschrägten vorderen Enden 40 zur Anlage an den rückseitigen zweiten Enden 24 der klauenförmigen Spannelemente 19 auf.

Wie aus den Figuren 1 und 2 hervorgeht, ist die hier als Tellerfederpaket aus mehreren hintereinander angeordneten Tellerfedern 41 gebildete Spannfeder 7 in einem mittleren Teil einer Durchgangsöffnung 42 des Maschinenteils 2 angeordnet und zwischen einer Ringschulter 43 des radial äußeren zweiten Stangenteils 18 und einem innerhalb der Durchgangsöffnung 42 axial verschiebbaren Druckring 44 eingespannt. Die Spannfeder 7 ist dabei so zwischen der Ringschulter 43 und dem Druckring 44 angeordnet, dass sie weder in der in Figur 1 gezeigtem Spannstellung noch in Lösestellung von Figur 2 zur Anlage an dem Maschinenteil 2 gelangt.

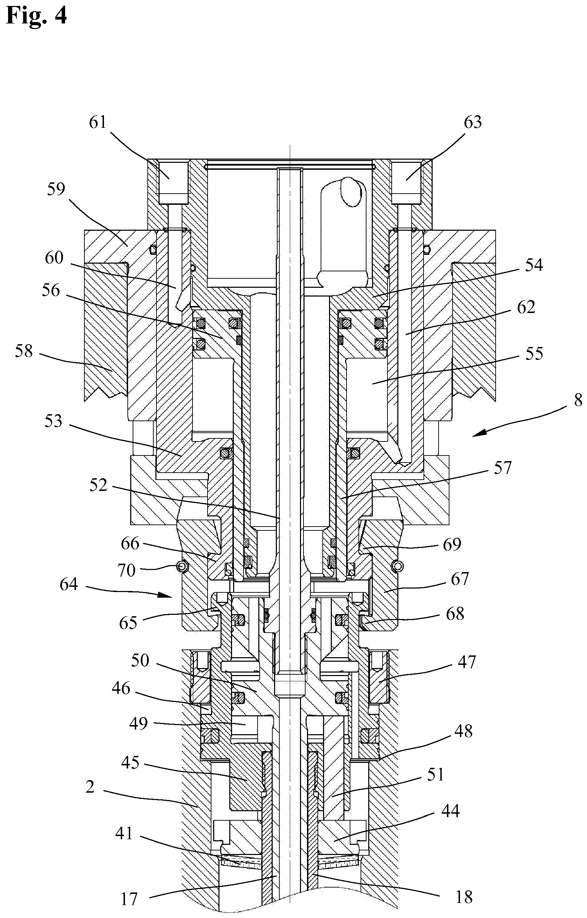

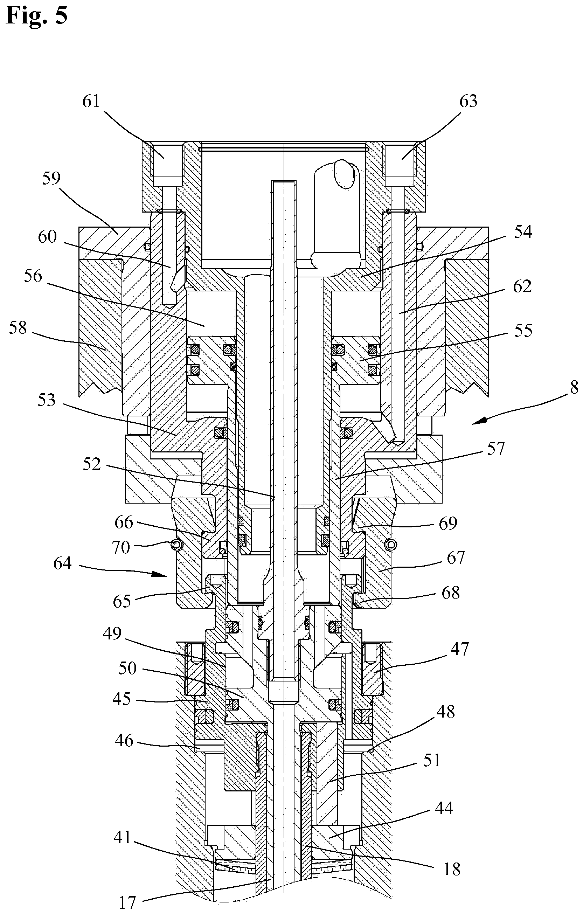

In den Figuren 4 und 5 ist erkennbar, dass an dem hinteren Ende des radial äußeren zweiten Stangenteils 18 eine Zugbuchse 45 befestigt ist. Die Zugbuchse 45 ist in einem im Durchmesser erweiterten hinteren Teil 46 der Durchgangsöffnung 42 des Maschinenteils 2 axial verschiebbar geführt und wird durch einen am hinteren Enden des Maschinenteils 2 eingeschraubten Haltering 47 axial gesichert. Die Zugbuchse 45 ist innerhalb des Maschinenteils 2 zwischen einem Absatz 48 und dem Haltering 47 verschiebbar. In einer Öffnung 49 der Zugbuchse 45 ist ein im Durchmesser erweitertes hinteres Ende 50 des in dem zweiten Stangenteil 18 verschiebbar geführten ersten Stangenteils 17 axial verschiebbar geführt. Über mehrere in der Zugbuchse 45 axial verschiebbar geführte und in Umfangsrichtung beabstandete Stifte 51 ist das hintere Ende 50 des inneren Stangenteils 17 mit dem Druckring 44 verbunden. Über die Stifte 51 kann so der Druckring 44 von dem hinteren Ende 50 des inneren Stangenteils 17 verschoben werden. In das hintere Ende des inneren Stangenteils 17 ist ein Übergaberohr 52 eingeschraubt, durch das Kühlflüssigkeit oder ein anderes Arbeitsfluid über das innere Stangenteil 17 zur der Werkzeugaufnahme 1 bzw. dem Werkzeug geleitet werden kann.

An dem von der Werkzeugaufnahme 1 abgewandten hinteren Ende des Maschinenteils 2 ist die in den Figuren 4 und 5 gesondert dargestellte Löseeinrichtung 8 angeordnet. Durch die Löseeinrichtung 8 kann das erste Stangenteil 17 in die Durchgangsöffnung 42 des Maschinenteils 2 eingedrückt und das zweite Stangenteil 18 aus dem Maschinenteil 2 herausgezogen werden, so dass der Spannsatz 6 über die aus den beiden Stangenteilen 17 und 18 gebildete Spannstange entgegen der Kraft der Spannfeder 7 in die Lösestellung bewegt wird. Bei der Bewegung der Spannsatzes 6 in die Lösestellung wird über die Löseeinrichtung 8 außerdem die Spannfeder 7 an ihren beiden Enden zusammengedrückt. Beide Enden der Spannfeder 7 werden dabei verschoben.

Die Löseeinrichtung 8 enthält ein hohlzylindrisches Gehäuse, das aus einem außen angeordneten ersten Gehäuseteil 53 und einem mit diesem fest verbundenen, innen angeordneten zweiten Gehäuseteil 54 besteht. Die beiden Gehäuseteile 53 und 54 begrenzen einen ringförmigen Druckraum 55, in dem ein ringförmiger Druckkolben 56 mit einem hülsenförmigen Druckstück 57 über Radialdichtungen abgedichtet geführt und über ein Druckmedium axial verschiebbar angeordnet ist. Das aus den beiden Gehäuseteilen 53 und 54 zusammengesetzte Gehäuse ist in einer an einer Spindelhülse 58 oder einem anderen stationären Teil befestigten buchsenförmigen Aufnahme 59 axial beweglich angeordnet, so dass die Löseeinrichtung 8 relativ zum Maschinenteil 2 bewegbar ist. Das als Arbeitsspindel ausgebildete Maschinenteil 2 kann z.B. in der Spindelhülse 58 drehbar gelagert sein.

In dem ersten Gehäuseteil 53 befindet sich eine erste axiale Zuführöffnung 60, die über eine schräge Bohrung zu einem hinteren Ende des ringförmigen Druckraums 55 führt. Diese Zuführöffnung 60 kann über eine erste Anschlussbohrung 61 in dem zweiten Gehäuseteil 53 mit einem Druckfluid zum Ausfahren des Druckstücks 57 am Druckkolben 56 beaufschlagt werden. Eine zweite axiale Zuführöffnung 62 in dem ersten Gehäuseteil 53 und eine zweite schräge Bohrung führen zu dem vorderen Ende des Druckraums 55. Diese Zuführöffnung 60 kann über eine zweite Anschlussbohrung 63 in dem zweiten Gehäuseteil 53 mit Druckfluid zum Einfahren des Druckstücks 57 am Druckkolben 56 beaufschlagt werden.

Die Verbindung zwischen der Löseeinrichtung 8 und den beiden Stangenteilen 17 und 18 der Spannstange erfolgt einerseits über das Druckstück 57 am Druckkolben 56 und andrerseits über ein Verbindungsstück 64, das einen ringförmigen Bund 65 an dem gegenüber dem Maschinenteil 2 nach hinten vorstehenden Ende der Zugbuchse 45 und einen ringförmigen Bund 66 an einem der Zugbuchse 45 zugewandten vorderen Ende des Gehäuseteils 53 übergreift. Das gezeigte Verbindungstück 64 weist mehrere im Umfangsrichtung voneinander beabstandete zangenförmige Verbindungsteile 67 mit vorderen und hinteren Nasen 68 und 69 zum Übergreifen des Bund 65 an der Zugbuchse 45 und des Bunds 66 am Gehäuseteil 53 auf. Von einer Feder 70 werden die zangenförmigen Verbindungsteile 67 zusammengehalten und radial nach innen vorgespannt.

Die vorstehend beschriebene Spannvorrichtung funktioniert wie folgt:
Bei der in Figur 1 gezeigten Spannstellung sind die beiden Teile 9 und 10 des Spannkonus über die Spannfeder 7 und die beiden Stangenteile 17 und 18 der Spannstange aufeinander zu bewegt und die Spannelemente 19 werden in eine radial äußere Spannstellung gedrückt. In dieser Spannstellung liegen die äußeren Spannflächen 22 und 25 der Spannelemente 19 an der konischen Innenfläche 23 der Werkzeugaufnahme 1 bzw. der konischen Gegenfläche 26 im Maschinenteil 2 an, wodurch die Werkzeugaufnahme 1 unter Zug in der Aufnahmeöffnung 4 des Maschinenteils 2 gehalten wird.

Da sich das als Arbeitsspindel ausgebildete Maschinenteil 2 während einer Bearbeitung mit hohen Drehzahlen um die Längsachse 3 dreht, die Löseeinrichtung 8 jedoch keine Drehbewegung durchführt, ist bei der auch in Figur 4 gezeigten Spannstellung kein Kontakt zwischen der Löseeinrichtung 8 und dem Maschinenteil 2 vorhanden. Der Druckkolben 56 der Löseeinheit 8 ist in der Spannstellung eingefahren, so dass zwischen dem Druckstück 57 des Druckkolbens 56 und dem hinteren Ende 50 des ersten Stangenteils 17 ein Abstand vorhanden ist. Auch zwischen den vorderen Nasen 68 der Verbindungsteile 67 und der Zugbuchse 45 ist in der Spannstellung ein Abstand vorhanden.

Zum Lösen der Spannvorrichtung wird über die erste Anschlussbohrung 62 ein Druckfluid zugeführt, so dass der Druckkolben 56 ausfährt und mit seinem hülsenförmigen Druckstück 57 auf das hintere Ende 50 des innen angeordneten ersten Stangenteils 17 drückt und dieses nach vorne in Richtung der Aufnahmeöffnung 4 des Maschinenteils 2 schiebt. Gleichzeitig werden die beiden Gehäuseteile 53 und 54 des axial beweglichen Gehäuses der Löseeinheit 8 nach hinten verschoben, so dass das innen angeordnete zweite Stangenteil 18 über die Zugbuchse 45 und das Verbindungsstück 67 nach hinten gezogen wird. Dadurch wird auch die zwischen dem Ringbund 43 an dem zweiten Stangenteil 18 und dem Druckring 44 eingespannte Spannfeder 7 an ihren beiden Enden zusammengedrückt und die beiden Teile 9 und 10 des Spannkonus werden auseinander bewegt, so dass die Spannelemente 19 in die in Figur 2 gezeigte Lösestellung gelangen. In dieser Stellung sind die an der Außenseite der beiden Teile 9 und 10 des Spannkonus anliegenden Spannelemente 19 so weit radial nach innen verschoben, dass deren Spannflächen 22 außer Eingriff mit der konischen Innenfläche 23 an der Innenseite der Werkzeugaufnahme 1 gelangen und die Werkzeugaufnahme 1 ohne weiteres aus der konischen Aufnahmeöffnung 4 entnommen werden kann.

Der erfindungsgemäße Spannsatz ist nicht auf das vorstehend beschriebene Ausführungsbeispiel beschränkt. So können die Spannelemente z.B. die Form einer Kugel oder eine andere geeignete Form aufweisen. Das erfindungsgemäße Spannsystem kann nicht nur bei Hohlkegelspannsystemen, sondern auch bei Steilkegelspannsystemen oder anderen Spannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange, als Spannsatz für Polygonschaft-Spannsysteme (PSC), als Spannsatz mit kugelförmigen Spannelementen oder als Spannsatz für andere Werkzeugwechselsysteme ausgeführt sein. Die Spannvorrichtung ist auch für die lösbare Halterung von Werkstücken geeignet. Außerdem können unterschiedliche Löseeinrichtungen für die Zusammen- oder Auseinanderbewegung der beiden Stangenteile der Spannstange zum Einsatz gelangen.

### Bezugszeichenliste

- 1: Werkzeugaufnahme
- 2: Maschinenteil
- 3: Längsachse
- 4: Konische Aufnahmeöffnung
- 5: Kegel
- 6: Spannsatz
- 7: Spannfeder
- 8: Löseeinrichtung
- 9: Erstes Teil des Spannkonus
- 10: Zweites Teil des Spannkonus
- 11: Konischer Spannbereich
- 12: Konische Außenfläche
- 13: Zylindrischer Führungsbereich
- 14: Führungsabschnitt
- 15: Konischer Spannbereich
- 16: Konische Außenfläche
- 17: Erstes Stangenteil
- 18: Zweites Stangenteil
- 19: Klauenförmige Spannelemente
- 20: Mittelachse
- 21: Erstes Ende der Spannelemente
- 22: Erste äußere Spannfläche
- 23: Konische Innenfläche
- 24: Zweites Ende der Spannelemente
- 25: Zweite äußere Spannfläche
- 26: Konische Gegenfläche
- 27: Ringabsatz
- 28: Erste innere Spannfläche
- 29: Zweite innere Spannfläche
- 30: Schräge
- 31: Führungsbuchse
- 32: Haltebuchse
- 33: Ansätze
- 34: Stirnfläche
- 35: Druckfeder
- 36: Nut
- 37: Gegenfläche
- 38: Hintere Anlagefläche
- 39: Ringsegmente
- 40: Abgeschrägte vordere Enden
- 41: Tellerfeder
- 42: Durchgangsöffnung
- 43: Ringschulter
- 44: Druckring
- 45: Zugbuchse
- 46: Hinterer Teil der Durchgangsöffnung
- 47: Haltering
- 48: Absatz
- 49: Öffnung
- 50: Hinteres Ende des ersten Stangenteils
- 51: Stift
- 52: Übergaberohr
- 53: Inneres Gehäuseteil
- 54: Äußeres Gehäuseteil
- 55: Druckraum
- 56: Druckkolben
- 57: Druckstück
- 58: Spindelhülse
- 59: Aufnahme
- 60: Erste axiale Zuführöffnung
- 61: Erste Anschlussbohrung
- 62: Zweite axiale Zuführöffnung
- 63: Zweite Anschlussbohrung
- 64: Verbindungsstück
- 65: Bund
- 66: Bund
- 67: Zangenförmiges Verbindungsteil
- 68: Nase
- 69: Nase
- 70: Feder

## Patentansprüche

1. Spannvorrichtung zum Spannen eines Werkstücks oder einer Werkzeugs bzw. einer Werkzeugaufnahme (1) in einem Maschinenteil (2) einer Werkzeugmaschine, mit einem innerhalb des Maschinenteils (2) verschiebbar angeordneten Spannstange (17, 18), einem über die Spannstange (17, 18) zwischen einer Spannstellung und einer Lösestellung bewegbaren Spannsatz (6), einer der Spannstange (17, 18) zugeordneten Spannfeder (7) zur Erzeugung der Einzugskraft des Spannsatzes (6) und einer Löseeinrichtung (8), durch die der Spannsatz (6) über die Spannstange (17, 18) entgegen der Kraft der Spannfeder (7) in die Lösestellung bewegbar ist, **dadurch gekennzeichnet, dass** die Spannfeder (7) zwischen einem ersten Stangenteil (17) und einem demgegenüber verschiebbaren zweiten Stangenteil (18) der Spannstange (17, 18) eingespannt ist und von der Löseeinrichtung (8) bei der Bewegung des Spannsatzes (6) in die Lösestellung durch entgegengesetzte Verschiebung der beiden Stangenteile (17, 18) an beiden Enden zusammengedrückt wird.

2. Spannvorrichtung nach Anspruch 1, **dadurch gekennzeichnet, dass** die Löseeinrichtung (8) ein innerhalb einer stationären Aufnahme (59) verschiebbar angeordnetes Gehäuse (53, 54) zur Verschiebung des zweiten Stangenteils (18) und einen innerhalb eines Druckraums (55) des Gehäuses (53, 54) verschiebbar geführten und über ein Druckmedium bewegbaren Druckkolben (56) zur Verschiebung des ersten Stangenteils (17) enthält.

3. Spannvorrichtung nach Anspruch 2, **dadurch gekennzeichnet, dass** an dem hinteren Ende des zweiten Stangenteils (18) eine Zugbuchse (45) angeordnet ist, die über ein Verbindungsstück (64) mit dem Gehäuse (53, 54) der Löseinrichtung (8) verbunden ist.

4. Spannvorrichtung nach Anspruch 3, **dadurch gekennzeichnet, dass** das Verbindungsstück (64) mehrere im Umfangsrichtung voneinander beabstandete, zangenförmige Verbindungsteile (67) enthält, die mit vorderen und hinteren Nasen (68, 69) einen Bund (65) an der Zugbuchse (45) und einen Bund (66) an einem Gehäuseteil (53) des Gehäuses (53, 54) übergreifen.

5. Spannvorrichtung nach Anspruch 4, **dadurch gekennzeichnet, dass** die zangenförmige Verbindungsteile (67) durch eine Feder (70) zusammengehalten und nach innen vorgespannt sind.

6. Spannvorrichtung nach einem der Ansprüche 3 bis 5, **dadurch gekennzeichnet, dass** in der Zugbuchse (45) ein im Durchmesser erweitertes hinteres Ende (50) des ersten Stangenteils (17) axial verschiebbar geführt ist.

7. Spannvorrichtung nach Anspruch 6, **dadurch gekennzeichnet, dass** das hintere Ende (50) des ersten Stangenteils (17) über mehrere in der Zugbuchse (45) axial verschiebbar geführte Stifte (51) mit einem Druckring (44) verbunden ist.

8. Spannvorrichtung nach Anspruch 7, **dadurch gekennzeichnet, dass** die Spannfeder (7) zwischen einer Ringschulter (43) des zweiten Stangenteils (18) und dem mit dem ersten Stangenteil (17) verbundenen Druckring (44) eingespannt ist.

9. Spannvorrichtung nach einem der Ansprüche 1 bis 8, **dadurch gekennzeichnet, dass** der Spannsatz (6) einen Spannkonus mit zwei durch die beiden Stangenteile (17, 18) der Spannstange entgegengesetzt zueinander verschiebbaren Teilen (9, 10) und mehreren an deren Außenseite im Unfangsrichtung voneinander beabstandet anliegenden Spannelementen (19) umfasst, die durch entgegengesetzte Verschiebung der beiden Teile (9, 10) des Spannkonus zwischen einer radial äußeren Spannstellung und einer radial inneren Lösestellung bewegbar sind.

10. Spannvorrichtung nach Anspruch 9, **dadurch gekennzeichnet, dass** die Spannelemente (19) eine erste innere Spannfläche (28) zur Anlage an einer konischen Außenfläche (12) des ersten Teils (9) des Spannkonus und eine zweite innere Spannfläche (29) zur Anlage an einer konischen Außenfläche (16) des zweiten Teils (10) des Spannkonus aufweisen.

11. Spannvorrichtung nach Anspruch 9 oder 10, **dadurch gekennzeichnet, dass** das erste Teil (9) des Spannkonus einen zylindrischen Führungsbereich (13) enthält, auf dem ein hohlzylindrischer Führungsabschnitt (14) des zweiten Teils (10) des Spannkonus verschiebbar geführt ist.

12. Spannvorrichtung nach einem der Ansprüche 9 bis 11, **dadurch gekennzeichnet, dass** die Spannelemente (19) in Form von Spannklauen mit einer durch einen konischen Flächenabschnitt gebildeten ersten äußeren Spannfläche (22) und einer zur ersten Spannfläche (22) entgegengesetzt geneigten und ebenfalls durch einen konischen Flächenabschnitt gebildeten zweiten äußeren Spannfläche (25) ausgebildet sind.

13. Bearbeitungseinheit einer Werkzeugmaschine mit einem Maschinenteil (2) und einer Spannvorrichtung zum Spannen eines Werkstücks oder einer Werkzeugs bzw. einer Werkzeugaufnahme (1) in dem Maschinenteil (2), **dadurch gekennzeichnet, dass** die Spannvorrichtung nach einem der Ansprüche 1 bis 12 ausgebildet ist.

14. Bearbeitungseinheit nach Anspruch 13, **dadurch gekennzeichnet, dass** die Spannfeder in einer Durchgangsöffnung (42) des Maschinenteils (2) sowohl in der Spannstellung als auch in der Lösestellung des Spannsatzes (6) von dem Maschinenteil (2) beabstandet angeordnet ist.

15. Bearbeitungseinheit nach Anspruch 13 oder 14, **dadurch gekennzeichnet, dass** das Maschinenteil (2) eine in einer Spindelaufnahme (58) drehbar gelagerte und motorisch drehbare Arbeitsspindel ist.
